# EUROPÄISCHE PATENTSCHRIFT

(11) **EP 1 777 145 B1**
(45) Veröffentlichungstag und Bekanntmachung des Hinweises auf die Patenterteilung: **27.06.2012**
(21) Anmeldenummer: 06021586.0
(22) Anmeldetag: 14.10.2006
(51) Int. Cl.: B62D 25/00, B60R 21/34

(54) **Windschutzscheibenanordnung**
Windscreen arrangement
Agencement de pare-brise

(30) Priorität: 19.10.2005 DE 102005049945
(43) Veröffentlichungstag der Anmeldung: 25.04.2007
(73) Patentinhaber: GM Global Technology Operations LLC, Detroit, MI 48265-3000 (US)
(72) Erfinder: Mildner, Udo, 65550 Limburg (DE)
(74) Vertreter: Daniel, Ulrich W.P.

(56) Entgegenhaltungen:
- EP-A- 1 479 574
- EP-A- 1 514 768
- EP-A2- 1 331 146
- WO-A-01/30638
- DE-A1- 10 059 694
- DE-A1- 10 106 149
- DE-A1- 10 335 030
- DE-A1- 19 534 957
- DE-U1-202004 010 601

## Beschreibung

Die Erfindung liegt auf dem Gebiet des aufprall- und crashoptimierten Designs des Frontbereichs von Kraftfahrzeugen und betrifft eine Windschutzscheibenanordnung für ein Personenkraftfahrzeug nach dem Oberbegriff des Patentanspruchs 1.

Eine derartige Anordnung ist der Europäischen Patentanmeldung EP 1 479 574 A1 entnehmbar, die einen nach außen wirkenden Airbag betrifft, der sich bei einem von einem Sensor detektierten äußeren Aufprall eines Gegenstandes mittels Führungsschienen in definierte Abdeckzonen rund um die Windschutzscheibe entfaltet. Dabei wird die äußere Abdeckung des Airbags teilweise aufgerissen, indem ein Abdeckungsteil entlang einer definierten Abrisskante aufgerissen wird.

Die deutsche Patentanmeldung DE 100 59 694 A1 ist auf die stoßabsorbierende Wirkung einer A-Säule im Kollisionsfall gerichtet ist. Durch eine vergleichsweise aufwändige Konstruktion wird bedarfsweise ein ausreichender Bewegungsraum für die sich deformierende A-Säule bereitstellt, indem bei Detektion eines Aufpralls die Vordertür im Bereich der A-Säule zwangsweise aus der Deformationsbewegungsrichtung der A-Säule herausschwenkt.

Aus der Deutschen Patentanmeldung DE 195 06 160 A1 geht eine Windschutzscheibenanordnung hervor, die Teil einer Rahmenkonstruktion ist und einen Windschutzscheibenrahmen umfasst, der seitlich von Trägern begrenzt ist.

Dabei ist üblicherweise der Sichtbereich der seitlichen Windschutzscheibenträger (A-Säule) in die Fahrzeugseitenwand integriert und mit einer innenliegenden Verstärkung derart verschweißt, dass sich ein relativ steifes Profil bildet. Häufig vergrößert sich der Abstand zwischen den Windschutzscheibenträgern zur Motorhaube hin.

Die Fahrzeugseitenwandkontur weist aus aerodynamischen Gründen und aufgrund des Fahrzeugdesigns häufig kleine Biegeradien auf, die relativ scharfkantig sind.

Diese Gestaltung ist im Hinblick auf das Aufprallverhalten bzw. die Gefährdung anderer Verkehrsteilnehmer nicht optimal. Bei einem frontalen Zusammenstoß - zum Beispiel bei Aufprall eines Passanten - mit dem Frontbereich des Kraftfahrzeuges besteht durch die scharfkantige Fahrzeugseitenwandkontur (A-Säule) eine erhebliche Gefährdung der Person, insbesondere im Kopfbereich.

Der vorliegenden Erfindung liegt nun die Aufgabe zugrunde, die Windschutzscheibenanordnung eines Personenkraftfahrzeuges derart zu verbessern, dass in Aufprallsituationen, insbesondere beim Aufprall von Passanten im Windschutzscheibenbereich des Fahrzeuges, aufprallbedingte schwerwiegende Schäden weitgehend vermieden werden.

Erfindungsgemäß wird diese Aufgabe durch eine Windschutzscheibenanordnung mit den Merkmalen des Patentanspruchs 1 gelöst.

Demgemäß ist bei einer Windschutzscheibenanordnung für ein Personenkraftfahrzeug mit einer Windschutzscheibe, die sich zwischen zwei seitlichen Windschutzscheibenträgern erstreckt, vorgesehen, dass jeder seitliche Windschutzscheibenträger frontseitig von einer Blende abgedeckt ist und dass die Blende mindestens eine Sollbruchstelle aufweist.

Vorteilhafte Ausgestaltungen und Weiterbildungen der Erfindung sind Gegenstand der Unteransprüche sowie der Beschreibung unter Bezugnahme auf die Zeichnung.

Die der vorliegenden Erfindung zugrunde liegende Idee besteht also unter anderem darin, bewusst eine Energie verzehrende Zone in die Blende(n) zu integrieren. Dadurch bricht bzw. kollabiert die Blende beim Auftreffen eines Gegenstandes bzw. einer Person und dem damit verbundenen Überschreiten des Belastungsschwellwertes definiert an der Sollbruchstelle. Durch die Verformung und den Bruch der Blende findet eine Energieabsorption statt, die die Aufprallenergie zumindest teilweise verzehrt und so etwaige Schäden an Personen oder Gegenständen bzw. an dem Personenkraftwagen selbst vermindert oder bestenfalls vermeidet.

Dabei kann die Windschutzscheibenträgerkonstruktion an sich in üblicher Bauweise, insbesondere in sogenannter Schalenbauweise oder auch als Rohrprofil, ausgeführt sein.

Ein wesentlicher Vorteil der erfindungsgemäßen Windschutzscheibenanordnung besteht damit darin, dass unter Verwendung üblicher, bewährter Fahrzeugkonstruktionen zumindest ein erheblicher Anteil der auf die Aufprallbeteiligten wirkenden Aufprallkräfte dadurch absorbiert wird, dass die Blende an ihrer mindestens einen Sollbruchstelle bricht. Durch entsprechende Materialwahl und/oder Beschichtung der Blende und/oder Anordnung der Sollbruchstelle kann dafür gesorgt werden, dass beim Sollbruch nach außen hin keine scharfen, ein zusätzliches Verletzungsrisiko darstellenden Bruchkanten entstehen.

Die Sollbruchstelle besteht aus mindestens einer Ausnehmung im Material der Blende.

Vorzugsweise erstreckt sich die Sollbruchstelle bzw. die Materialausnehmung in Richtung des Windschutzscheibenträgers, also im Wesentlichen zwischen Dachbereich und Motorbereich des Fahrzeuges.

Nach einer weiteren vorteilhaften Ausgestaltung der Erfindung ist die Sollbruchstelle in einem innenseitigen Bereich der Blende ausgebildet, und zwar bevorzugt entlang einer Blendenkante. Die Sollbruchstelle kann dabei bevorzugt rinnen- oder nutförmig sein.

Einen besonders effektiven energieverzehrenden Effekt hat die Blende der erfindungsgemäßen Windschutzscheibenanordnung dann, wenn nach einer bevorzugten Ausgestaltung der Erfindung sich die Windschutzscheibenträger zur Fahrzeugfront hin nicht über die Oberfläche der Windschutzscheibe hinaus erstrecken. Mit anderen Worten: Bis zum vollständigen, großflächigen Aufprall eines Gegenstandes oder einer Person auf den Windschutzscheibenbereich sind allein die Blenden als energieverzehrende Elemente wirksam, so dass kein isolierter, verletzungsverursachender harter Aufprall auf die den oder die Windschutzscheibenträger erfolgen kann.

Montagetechnisch bevorzugt ist die Blende an einem karosserieseitigen Montageträger befestigt. Der Montageträger kann vorzugsweise aus Blech oder Kunststoff gefertigt sein und sowohl im Rohbau oder erst in der Endmontage an dem Windschutzscheibenträger (A-Säulenstruktur) befestigt werden. Die Befestigung des Montageträgers an der Karosserie erfolgt bevorzugt mittels Nietverbindungen.

Nach einer für die Montage und den etwaigen Austausch der Blende bevorzugten Ausgestaltung der Erfindung weist der Montageträger mehrere Ausnehmungen auf, in die korrespondierende Montagehaken der Blende eingreifen. Dabei können die Montagehaken vorzugsweise in den korrespondierenden Ausnehmungen verrasten, so dass die Blende fest von dem Montageträger gehalten ist. Um ein ungewolltes Lösen der Blende zu verhindern, kann diese zusätzlich - bevorzugt im vorderen Fahrzeugbereich beispielsweise unterhalb des Wasserabweisers - mit der Fahrzeugkarosserie verbunden, beispielsweise verschraubt werden.

Nach einer vorteilhaften Fortbildung der Erfindung sind die Montagehaken im zur Fahrzeugaußenseite hin weisenden, seitlichen Bereich der Blende angeordnet. Sie befinden sich damit relativ weit außen im abfallenden Bereich der Windschutzscheibenträger (d.h. der A-Säulenkontur). Damit sind sie außerhalb des unmittelbaren Aufschlagbereiches bei einem Personenaufprall angeordnet, wodurch die Gefährdung des Aufprallopfers durch die Montagehaken weiter vermindert ist.

Zur Gewichtsersparnis und um ein variables Design mit einfachen Mitteln zu realisieren, ist die Blende bevorzugt aus Kunststoff hergestellt.

Die Erfindung wird nachfolgend anhand der in den schematischen Figuren der Zeichnung angegebenen Ausführungsbeispiele näher erläutert. Es zeigen dabei:
- Figur 1: in Seitenansicht schematisch eine Karosserieseite;
- Figur 2: ein erstes Ausführungsbeispiel einer erfindungsgemäßen Windschutzscheibenanordnung;
- Figur 3: ein zweites Ausführungsbeispiel einer erfindungsgemäßen Windschutzscheibenanordnung;
- Figur 4: in Seitenansicht von innen eine Kunststoffblende;
- Figur 5: die Kunststoffblende im Querschnitt und
- Figur 6: einen Montageträger.

In allen Figuren der Zeichnung sind gleiche bzw. funktionsgleiche Elemente und Merkmale - sofern nichts Anderes angegeben ist - mit denselben Bezugszeichen versehen worden.

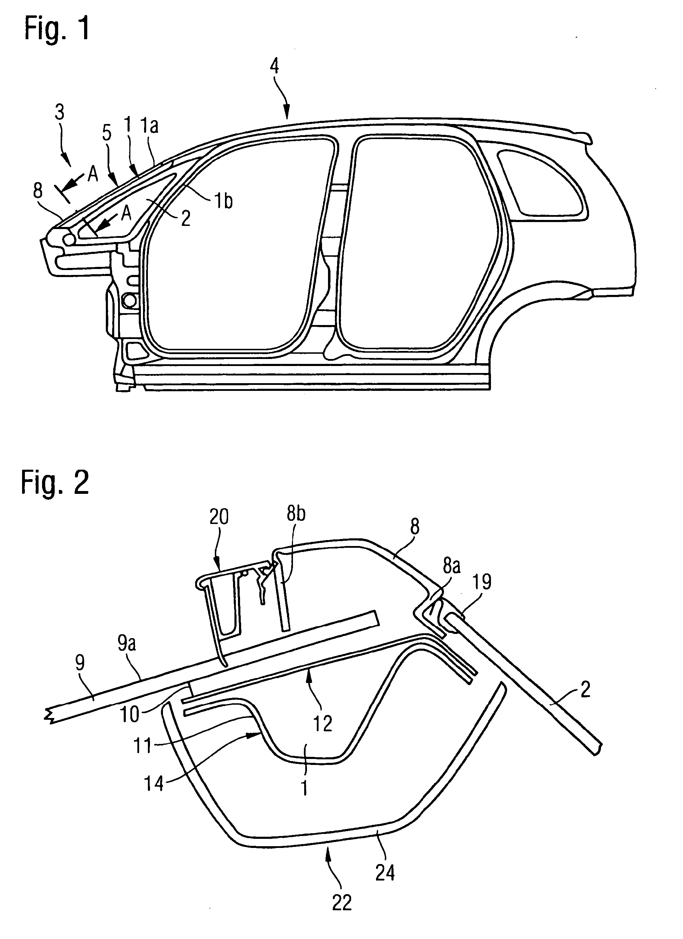

Figur 1 zeigt in Seitenansicht den seitlichen Karosseriebereich einer Personenkraftwagenkarosserie mit einem im vorderen Bereich verlaufenden seitlichen Windschutzscheibenträger 1, der üblicherweise - so auch nachfolgend - als A-Säule bezeichnet wird. Die A-Säule kann wie in Figur 1 dargestellt zwei Teilträger 1a und 1b aufweisen, zwischen denen ein sogenanntes Dreiecksfenster 2 angeordnet werden kann. Die A-Säule erstreckt sich von einem frontseitigen Bereich 3 zum Dachbereich 4 der Fahrzeugkarosserie.

Die andere, in Figur 1 nicht sichtbare gegenüberliegende Fahrzeugseite ist zur Fahrzeuglängsebene im Wesentlichen spiegelbildlich aufgebaut und umfasst einen entsprechenden Windschutzscheibenträger (A-Säule). Über im Dachbereich 4 und im Frontbereich 3 jeweils quer verlaufende Träger sind die beiden Fahrzeugkarosserieseiten miteinander unter Bildung eines Windschutzscheibenrahmens 5 verbunden.

Jede A-Säule 1 ist zur Frontseite 3 hin mit jeweils einer Blende 8 abgedeckt (in Figur 1 ist wiederum nur eine Blende 8 der linksseitigen A-Säule 1 erkennbar, die entlang des Teilträgers 1a verläuft).

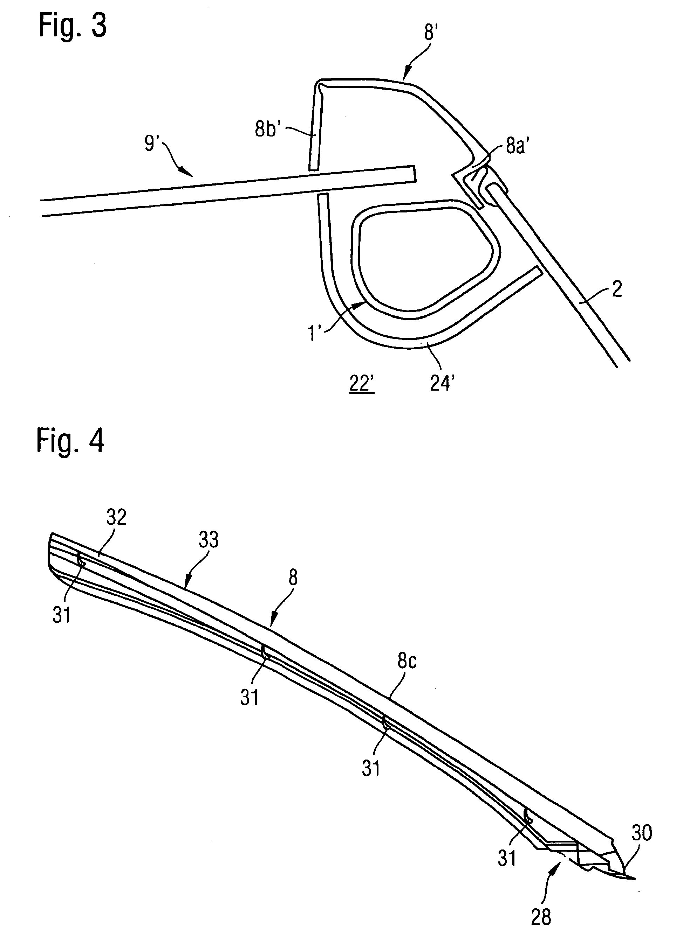

Die Figuren 2 und 3 zeigen, dass die A-Säule in herkömmlicher Schalenbauweise (Figur 2) oder als Rohrprofil (Figur 3) ausgeführt sein kann.

Wie Figur 2 im Querschnitt entlang der Linie A-A der Figur 1 zeigt, verläuft die Windschutzscheibe 9 mit einem gewissen frontseitigen Abstand 10 zur A-Säule 1. Diese ist aus einer Halbschale 11 gebildet, die mit der äußeren Seitenwand 12 unter Bildung eines Profils 14 verschweißt ist. Das Profil 14 ist starr und biegesteif, so dass es bei einem frontseitigen Aufprall eines Gegenstandes oder einer Person kaum nachgeben kann. Deshalb könnte bei einem Aufprall die Aufprallenergie zu erheblichen Schäden - insbesondere Personenschaden - führen.

Zur Minderung dieser Aufprallfolgen bzw. Gefahren ist die A-Säule (Windschutzscheibenträger 1) von der Blende 8 abgedeckt, die sich mit einem Schenkel 8a entlang der Aufnahme 19 für das Dreieckfenster 2 und mit einem anderen Schenkel 8b annähernd rechtwinklig zur Windschutzscheibe 9 und im Wesentlichen entlang der A-Säule 1 erstreckt. Zur Windschutzscheibe 9 hin ist eine Zierleiste 20 vorgesehen. Zum Fahrgastraum 22 hin ist die A-Säule 1 von einer inneren Säulenverkleidung 24 verdeckt.

Im montierten Zustand überragt die in den Windschutzscheibenrahmen 5 eingebrachte, beispielsweise eingeklebte Windschutzscheibe 9 mit ihrer außenseitigen Oberfläche 9a die seitlichen A-Säulen 1 nicht. Mit anderen Worten: Die A-Säulen erstrecken sich zurückgesetzt hinter der Windschutzscheibenaußenseite.

Figur 3 zeigt eine im Wesentlichen der Figur entsprechende Ausgestaltung, wobei hier die A-Säule 1' von einem Rohrprofil gebildet ist. Dieses Profil ist zum Fahrgastraum 22' von einer innenseitigen Abdeckung 24' abgedeckt. Seitlich ist die Dreiecksfensterscheibe 2 zu erkennen, an deren frontseitiger Kante sich der Schenkel 8a' einer Blende 8' in vorbeschriebener Weise erstreckt. Der andere Schenkel 8b' ist in ähnlicher Weise wie in Figur 2 gezeigt angeordnet und umgreift somit das seitliche Ende der Windschutzscheibe 9'.

Figur 4 zeigt in isolierter Darstellung eine Blende 8 wie sie in der Ausgestaltung nach den Figuren 1, 2 bzw. 3 verwendet werden kann. Die Blende 8 weist an ihrem frontseitigen, in montiertem Zustand vorderen, dem Motorraum zugewandten Ende 28 einen Flansch 30 auf, der zur Verschraubung mit der Karosserie dient. Ferner sind mehrere Montagehaken 31 erkennbar, die im zur Fahrzeugaußenseite 32 hin weisenden, seitlichen Bereich 33 der Blende angeordnet sind. Sie befinden sich - im montierten Zustand der Blende - damit relativ weit außen im abfallenden Bereich der A-Säule und damit außerhalb des unmittelbaren Aufschlagbereiches bei einem Personenaufprall. Dadurch ist die Gefährdung des Aufprallopfers durch die Montagehaken vermindert. Die Blende 8 kann bevorzugt aus Kunststoff bestehen und auf ihrer äußeren, designwirksamen Oberseite 8c beschichtet und/oder lackiert sein.

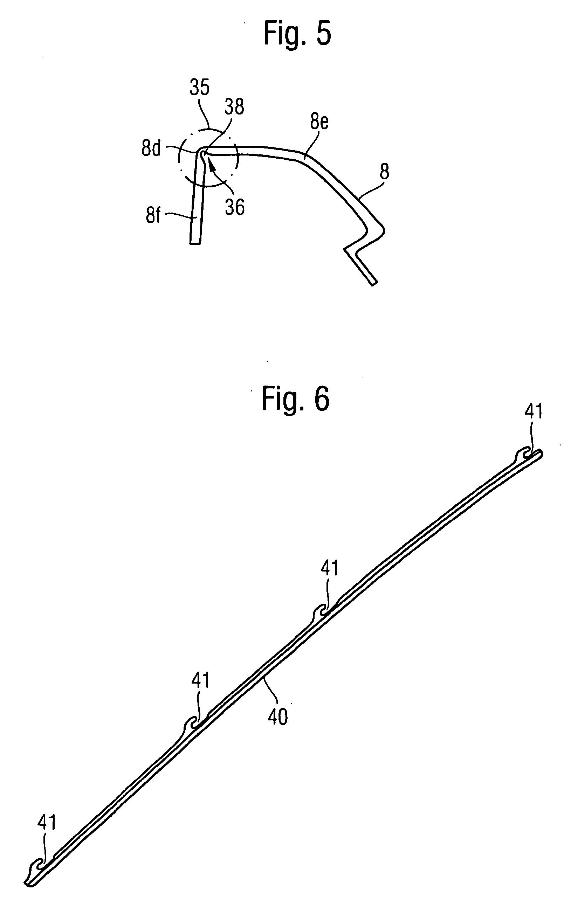

Figur 5 zeigt die Blende 8 abermals (wie die Figuren 2 und 3) im Querschnitt, um die Anordnung und Einbringung einer Sollbruchstelle 35 zu illustrieren. In dem innenliegenden Bereich 36 einer Blendenkante 8d ist eine deutliche Materialausnehmung 38 erkennbar. Diese sich entlang der Blende 8 in Längsrichtung und damit im Wesentlichen parallel zur jeweiligen A-Säule 1 erstreckende Materialausnehmung ist hier beispielsweise rinnenförmig ausgebildet.

Im Falle eines Aufpralls eines Gegenstandes oder einer Person auf den frontseitigen Windschutzscheibenbereich des Fahrzeuges würde sich die Blende beim Überschreiten einer bestimmten Belastung an der Sollbruchstelle deformieren und beispielsweise nach innen einknicken. Je nach Ausführung der Sollbruchstelle kann sich dabei der Hauptteil 8e der Blende von dem übrigen Teil 8f lösen oder aber zumindest durch Einknicken verformen. Damit wird in vorteilhafter Weise ein erheblicher Betrag der beim Aufprall auftretenden und für Verletzungen ursächlichen Aufprallenergie (Stoßenergie) verzehrt. Damit mindert sich der Aufprall für den Gegenstand bzw. die Person ganz wesentlich.

Figur 6 zeigt schließlich einen Montageträger 40, der mit der Fahrzeugkarosserie beispielsweise durch Nietverbindungen fest verbunden ist. Der Montageträger weist zu den Montagehaken 31 (Figur 4) korrespondierende Ausnehmungen 41 auf, die in ihrer Form so gestaltet sind, dass die Montagehaken 31 in die Ausnehmungen hineingleiten können und dort verrasten. Damit ist eine feste, aber dennoch lösbare Befestigung der Blende an dem Montageträger 40 sichergestellt. Damit lässt sich die Blende beispielsweise bei der Instandsetzung nach einem Aufprall sehr leicht auswechseln.

Mit der erfindungsgemäßen Windschutzscheibenanordnung wird im Kollisionsfall ein erheblicher Betrag der Aufprallenergie durch gezielte Deformation der Blende absorbiert, so dass die Aufprallfolgen bzw. Verletzungen zumindest vermindert werden können. Die vorzugsweise aus Kunststoff bestehende Blende kann dabei in Doppelfunktion auch dem ansprechenden Design des Fahrzeuges dienen und erlaubt ohne signifikante Gewichtserhöhung, übliche Konstruktionen der A-Säule in Schalenbauweise oder als Rohrprofil beizubehalten.

Obgleich die vorliegende Erfindung vorstehend anhand bevorzugter Ausführungsbeispiele beschrieben wurde, ist sie nicht darauf beschränkt, sondern auf vielfältige Art und Weise modifizierbar, ohne dass vom grundlegenden Prinzip der Erfindung abgewichen wird.

So ist die Erfindung nicht auf den in den vorstehenden Figuren dargestellten, speziellen Aufbau der A-Säule mit zwei Teilträgern beschränkt.

### Bezugszeichenliste

- 1: Windschutzscheibenträger
- 1': A-Säule
- 1a, 1b: Teilträger
- 2: Dreiecksfenster
- 3: frontseitiger Bereich
- 4: Dachbereich
- 5: Windschutzscheibenrahmen
- 8: Blende
- 8': Blende
- 8a: Schenkel
- 8a': Schenkel
- 8b: Schenkel
- 8b': Schenkel
- 8c: Oberseite
- 8d: Blendenkante
- 8e: Hauptteil
- 8f: Teil
- 9: Windschutzscheibe
- 9': Windschutzscheibe
- 9a: Oberfläche

- 10: Abstand
- 11: Halbschale
- 12: Seitenwand
- 14: Profils
- 19: Aufnahme

- 20: Zierleiste
- 22: Fahrgastraum
- 22': Fahrgastraum
- 24: Säulenverkleidung
- 24': Abdeckung
- 28: Ende

- 30: Flansch
- 31: Montagehaken
- 32: Fahrzeugaußenseite
- 33: Bereich
- 35: Sollbruchstelle
- 36: Bereich
- 38: Materialausnehmung

- 40: Montageträger
- 41: Ausnehmungen

## Patentansprüche

1. Windschutzscheibenanordnung für ein Personenkraftfahrzeug mit einer Windschutzscheibe (9), die sich zwischen zwei seitlichen Windschutzscheibenträgern (1) erstreckt,
- wobei jeder seitliche Windschutzscheibenträger (1) frontseitig von einer Blende (8) abgedeckt ist, **dadurch gekennzeichnet,**
- **dass** die Blende (8) eine energieverzehrende Zone aufweist, indem mindestens eine Sollbruchstelle (35) vorgesehen ist, an der die Blende beim Auftreffen eines Gegenstandes und dem damit verbundenen Überschreiten eines Belastungsschwellwertes definiert bricht bzw. kollabiert, wobei die Sollbruchstelle (35) aus mindestens einer Materialausnehmung (38) im Material der Blende (8) besteht.

2. Windschutzscheibenanordnung nach Anspruch 1, **dadurch gekennzeichnet, dass** sich die Sollbruchstelle (35) im Wesentlichen entlang des Windschutzscheibenträgers (1) erstreckt.

3. Windschutzscheibenanordnung nach Anspruch 2, **dadurch gekennzeichnet, dass** die Sollbruchstelle (35) im blendenseitig innen liegenden Bereich (36) einer Blendenkante (8d) ausgebildet ist.

4. Windschutzscheibenanordnung nach wenigstens einem der vorangehenden Ansprüche, **dadurch gekennzeichnet, dass** die Sollbruchstelle (35) nut- oder rinnenförmig ist.

5. Windschutzscheibenanordnung nach wenigstens einem der vorangehenden Ansprüche, **dadurch gekennzeichnet, dass** sich die Windschutzscheibenträger (1) zur Fahrzeugfront (3) hin nicht über die Oberfläche (9a) der Windschutzscheibe (9) hinaus erstrecken.

6. Windschutzscheibenanordnung nach wenigstens einem der vorangehenden Ansprüche, **dadurch gekennzeichnet, dass** die Blende (8) an einem karosserieseitigen Montageträger (40) befestigt ist.

7. Windschutzscheibenanordnung nach Anspruch 6, **dadurch gekennzeichnet, dass** der Montageträger (40) mit der Karosserie durch Nieten verbunden ist.

8. Windschutzscheibenanordnung nach wenigstens einem der Ansprüche 6 oder 7, **dadurch gekennzeichnet, dass** der Montageträger (40) mehrere Ausnehmungen (41) aufweist, in die korrespondierende Montagehaken (31) der Blende (8) eingreifen.

9. Windschutzscheibenanordnung nach Anspruch 8, **dadurch gekennzeichnet, dass** die Montagehaken (31) in den jeweils korrespondierenden Ausnehmungen (41) verrasten.

10. Windschutzscheibenanordnung nach Anspruch 8 oder 9, **dadurch gekennzeichnet, dass** die Montagehaken (31) im zur Fahrzeugaußenseite hin weisenden, seitlichen Bereich (33) der Blende (8) angeordnet sind.

11. Windschutzscheibenanordnung nach wenigstens einem der vorangehenden Ansprüche, **dadurch gekennzeichnet, dass** die Blende (8) aus Kunststoff besteht.

## Claims

1. A windshield arrangement for a passenger car with a windshield (9) which extends between two lateral windshield supports (1),
- with each lateral windshield support (1) being covered on the front side by a cover (8), **characterized in that**
- the cover (8) comprises a crush zone in which at least one predetermined breaking point (35) is provided at which the cover will break or collapse in a defined manner upon impact of an object and the resulting exceeding of a loading threshold, with the predetermined breaking point (35) consisting of at least one material recess (38) in the material of the cover (8).

2. A windshield arrangement according to claim 1, **characterized in that** the predetermined breaking point (35) substantially extends along the windshield support (1).

3. A windshield arrangement according to claim 2, **characterized in that** the predetermined breaking point (35) is arranged in the area (36) of an edge (8d) of the cover (8) which is disposed on the inside of the cover (8).

4. A windshield arrangement according to at least one of the preceding claims, **characterized in that** the predetermined breaking point (35) is shaped in the manner of a groove or conduit.

5. A windshield arrangement according to at least one of the preceding claims, **characterized in that** the windshield supports (1) do not extend beyond the surface (9a) of the windshield (9) in the direction towards the front of the vehicle (3).

6. A windshield arrangement according to at least one of the preceding claims, **characterized in that** the cover (8) is fastened to a body-side mounting support (40).

7. A windshield arrangement according to claim 6, **characterized in that** the mounting support (40) is connected with the car body by rivets.

8. A windshield arrangement according to at least one of the claims 6 or 7, **characterized in that** the mounting support (40) comprises several recesses (41) into which the corresponding mounting hooks (31) of the cover (8) engage.

9. A windshield arrangement according to claim 8, **characterized in that** the mounting hooks (31) latch into the respectively corresponding recesses (41).

10. A windshield arrangement according to claim 8 or 9, **characterized in that** the mounting hooks (31) are arranged in the lateral region (33) of the cover (8) which faces to the outside of the vehicle.

11. A windshield arrangement according to at least one of the preceding claims, **characterized in that** the cover (8) consists of plastic.

## Revendications

1. Dispositif de pare-brise pour un véhicule à moteur personnel avec un pare-brise (9) qui s'étend entre deux supports de pare-brise latéraux (1),
dans lequel chaque support de pare-brise latéral (1) est recouvert sur l'avant par un volet (8),
**caractérisé en ce que** le volet (8) présente une zone absorbant l'énergie en cela qu'il est prévu au moins un point de rupture nominal (35) il le volet se brise ou s'enfonce de façon définie en cas d'impact d'un objet dépassant une limite de contrainte, le point de rupture nominal (35) étant formé par au moins un évidement de matériau (38) dans le matériau du volet (8).

2. Dispositif de pare-brise selon la revendication 1, **caractérisé en ce que** le point de rupture nominal (35) s'étend pour l'essentiel le long du support de pare-brise (1).

3. Dispositif de pare-brise selon la revendication 2, **caractérisé en ce que** le point de rupture nominal (35) est formé dans la zone (36) intérieure du côté du volet d'un coin de volet (8d).

4. Dispositif de pare-brise selon l'une au moins des revendications précédentes, **caractérisé en ce que** le point de rupture nominal (35) est en forme de rainure ou d'auge.

5. Dispositif de pare-brise selon l'une au moins des revendications précédentes, **caractérisé en ce que** les supports de pare-brise (1) ne s'étendent pas au-delà de la surface (9a) du pare-brise (9) vers l'avant (3) du véhicule.

6. Dispositif de pare-brise selon l'une au moins des revendications précédentes, **caractérisé en ce que** le volet (8) est fixé à un support de montage (40) situé du côté de la carrosserie.

7. Dispositif de pare-brise selon la revendication 6, **caractérisé en ce que** le support de montage (40) est relié à la carrosserie par des rivets.

8. Dispositif de pare-brise selon l'une au moins des revendications 6 ou 7, **caractérisé en ce que** le support de montage (40) présente plusieurs évidements (41) dans lesquels des crochets de montage (31) correspondants du volet (8) se mettent en prise.

9. Dispositif de pare-brise selon la revendication 8, **caractérisé en ce que** les crochets de montage (31) engrènent dans les évidements (41) correspondants.

10. Dispositif de pare-brise selon la revendication 8 ou 9, **caractérisé en ce que** les crochets de montage (31) sont disposés dans la partie latérale (33) du volet (8) tournée vers l'extérieur du véhicule.

11. Dispositif de pare-brise selon l'une au moins des revendications précédentes, **caractérisé en ce que** le volet (8) est composé de plastique.
